(19) 

Europäisches Patentamt
European Patent Office
Office européen des brevets

(11)  **EP 2 172 826 B1**

(12)  **EUROPÄISCHE PATENTSCHRIFT**

(45)  Veröffentlichungstag und Bekanntmachung des Hinweises auf die Patenterteilung:
**07.12.2011  Patentblatt 2011/49**

(51)  Int Cl.:
*G05D 1/02* (2006.01)  *G06K 9/00* (2006.01)

(21)  Anmeldenummer: **09167913.4**

(22)  Anmeldetag: **14.08.2009**

(54)  **Verfahren und Vorrichtung zum Ermitteln eines Fahrspurverlaufs**

Device and method of determining the course of a lane

Dispositif et procédé destinés à déterminer un parcours de voie de circulation

(84)  Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30)  Priorität: **01.10.2008  DE 102008042538**

(43)  Veröffentlichungstag der Anmeldung:
**07.04.2010  Patentblatt 2010/14**

(73)  Patentinhaber: **Robert Bosch GmbH**
**70442 Stuttgart (DE)**

(72)  Erfinder:
- **Buerkle, Lutz**
  **71229 Leonberg (DE)**
- **Rentschler, Tobias**
  **75180 Pforzheim (DE)**
- **App, Thomas**
  **75015 Bretten (DE)**

(56)  Entgegenhaltungen:
**EP-A1- 1 193 661     EP-A1- 1 901 259**
**DE-A1- 10 117 237     US-B1- 6 718 259**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

STAND DER TECHNIK

Die vorliegende Erfindung betrifft ein Verfahren zum Ermitteln eines Verlaufs einer von einem Fahrzeug befahrenen Fahrspur. Ferner betrifft die Erfindung ein Computerprogrammprodukt und eine Vorrichtung zum Ermitteln eines Verlaufs einer von einem Fahrzeug befahrenen Fahrspur.

Zur Erhöhung von Komfort und Fahrsicherheit existieren Fahrerassistenzsysteme zur Querführung für Kraftfahrzeuge, die den Fahrer vor unbeabsichtigtem Verlassen der eigenen Fahrspur warnen (Lane Departure Warning - LDW) oder den Fahrer durch Lenkeingriffe beim Halten des Fahrzeugs in der eigenen Fahrspur unterstützen (Lane Keeping Support - LKS). Die Anforderungen dieser Systeme an die Genauigkeit, Qualität und Verfügbarkeit der Spurinformationen sind wesentlich höher als diejenigen von Fahrerassistenzsystemen zur Längsführung wie z.B. satellitengestützten Navigationssystemen oder ACC (Adaptive Cruise Control).

Fahrerassistenzsysteme zur Querführung arbeiten daher üblicherweise mit Umfeldsensoren wie z.B. Videosensoren und einer nachgeschalteten Auswertungssoftware, die im vor dem eigenen Fahrzeug liegenden Verkehrsraum Fahrspurmarkierungen des vom Fahrzeug befahrenen Fahrstreifens detektiert und deren Verlauf auf der Basis eines Modells beschreibt. Abhängig von der Lage des Fahrzeugs relativ zu den Fahrspurmarkierungen sowie seiner vorhergesagten weiteren Fortbewegungsrichtung wird dann beurteilt, ob das Fahrzeug die Fahrspur zu verlassen droht, um im gegebenen Fall Warnsignale abgeben bzw. Lenkeingriffe einleiten zu können. Bedingt durch das verwendete Messprinzip kommt es jedoch zu Ungenauigkeiten bei der Erkennung der Fahrspurmarkierungen. Zudem geben die Fahrspurmarkierungen nicht notwendigerweise den realen Fahrstreifenverlauf exakt wieder. Dies führt u. a. zu Oszillationen von Parametern der Modellkurven, mit denen die Auswertungssoftware den Verlauf der Fahrspurmarkierungen beschreibt, was sich letztendlich negativ auf die Zuverlässigkeit und den Komfort von Fahrerassistenzfunktionen wie LDW oder LKS auswirkt.

Die US 6 560 535 B2 offenbart ein Verfahren, bei dem zur Positionsbestimmung eines Fahrzeugs mit hoher Präzision Daten eines satellitengestützten Positionierungssystems mit zusätzlichen Daten wie dem Wegstreckenzählerstand des Fahrzeugs, Radumdrehungen eines Antiblockiersystems, Fahrtrichtungs- und/oder Neigungsmessungen kombiniert werden. Die so bestimmte Position wird mit einer digitalen Straßenkarte abgeglichen, um zu detektieren, wenn das Fahrzeug eine Fahrspur verlässt. Gegenwärtig übliche digitale Karten für Fahrzeug-Navigationssysteme besitzen jedoch eine Auflösung, die zwar zur Längsführung, nicht aber zur Querführung in der Fahrspur ausreicht. Ferner sind derartige Karten, die derzeit üblicherweise auf Speichermedien wie z.B. CDs oder DVDs abgespeichert sind, grundsätzlich zum Zeitpunkt ihrer Benutzung veraltet, da sie nur den zu ihrem Erstellungszeitpunkt gültigen Datensatz fest gespeichert haben. Die Bereitstellung und ständige Aktualisierung spezieller, hochpräziser Karten zur Querführung wäre mit großem Aufwand verbunden.

Die DE 103 11 241 A1 offenbart ein Verfahren für die Spurführung eines Fahrzeugs, bei dem eine Warneinrichtung, die bei Nichteinhaltung der Fahrspur ein Warnsignal abgibt, abgeschaltet wird, wenn ein Abgleich einer über ein GPS-System bestimmten Fahrzeugposition mit einer digitalen Straßenkarte ergibt, dass die Position innerhalb eines Stadtgebiets liegt, in dem die Warneinrichtung abgeschaltet werden soll. Die Genauigkeit und Zuverlässigkeit der Spurführung im eingeschalteten Zustand der Warneinrichtung wird jedoch nicht erhöht.

Es ist daher wünschenswert, den Verlauf einer von einem Fahrzeug befahrenen Fahrspur bei geringem Aufwand mit hoher Präzision und Zuverlässigkeit zu ermitteln.

OFFENBARUNG DER ERFINDUNG

Demgemäß vorgesehen ist ein Verfahren zum Ermitteln eines Verlaufs einer von einem Fahrzeug befahrenen Fahrspur, bei dem eine Position des Fahrzeugs erfasst wird. Basierend auf der erfassten Position und digitalen Kartierungsdaten der Fahrspur wird ein aktuelles Fahrspursegment ermittelt. Bei dem aktuellen Fahrspursegment kann es sich z.B. um einen Längenabschnitt der Fahrspur handeln, innerhalb dessen das Fahrzeug sich gerade befindet, oder um einen Längenabschnitt, der noch vor dem Fahrzeug liegt, bei dem z.B. ein Navigationssystem aber mit einer gewissen Wahrscheinlichkeit annimmt, dass er in der Zukunft von dem Fahrzeug befahren werden wird. Entsprechend einem Krümmungsverlauf der Fahrspur im aktuellen Fahrspursegment, basierend ebenfalls auf den digitalen Kartierungsdaten, wird eine Klasse des aktuellen Fahrspursegments festgelegt. Das heißt, das aktuelle Fahrspursegment wird anhand seines Krümmungsverlaufs einer Klasse innerhalb eines vorgebbaren Klassifizierungsschemas, das verschiedene Klassen von Fahrspursegmenten mit je nach Klasse unterschiedlichen Krümmungsverlaufstypen umfasst, zugeordnet.

In einem weiteren Schritt werden Spurinformationen zur Erkennung der Fahrspur im aktuellen Fahrspursegment erfasst. Die erfassten Spurinformationen werden einer adaptiven Filterung in Abhängigkeit von der Klasse des aktuellen Fahrspursegments unterzogen, d.h. werden auf eine je nach der Klasse des Spursegments, auf das sie sich beziehen, unterschiedlich vorgebbare Weise gefiltert.

Da die Filterung der Spurinformationen unter Kenntnis der Klasse des aktuellen Spursegments erfolgt, d.h. unter Kenntnis, welchen Typ von Krümmungsverlauf das aktuelle Spursegment aufweist, ermöglicht das Verfahren, Ungenauigkeiten der erfassten, ungefilterten Spurinformationen weitestgehend zu eliminieren, z.B. Messfehler und Oszillationen von Parametern von Modellkurven, mit denen eine Auswertungssoftware, die die ungefilterten Spurinformationen bereitstellt, den Verlauf der Fahrspurmarkierungen beschreibt. Auf diese Weise wird eine hohe Präzision der Spurinformationen erreicht. Die adaptive Filterung ermöglicht aufgrund der Kenntnis des grundsätzlichen Krümmungsverlaufs auch, teilweise fehlende oder fehlerhafte Spurinformationen, die z.B. bei videobasierten Spurinformationssystemen auf beschädigte oder verdeckte Fahrspurmarkierungen zurückgehen, zu ergänzen bzw. auszugleichen, so dass die Zuverlässigkeit der gefilterten Spurinformationen den Verlauf der Fahrspur mit erhöhter Zuverlässigkeit wiedergibt.

Um basierend auf der erfassten Position des Fahrzeugs und den digitalen Kartierungsdaten das aktuelle Fahrspursegment zu ermitteln, reicht es aus, wenn die Fahrzeugposition mit einer Genauigkeit erfasst wird, wie sie bei gegenwärtigen Navigationssystemen zur Längsführung des Fahrzeugs üblich und ausreichend ist. Auch die digitalen Kartierungsdaten brauchen keine höhere Präzision als die in gegenwärtigen Navigationssystemen übliche aufzuweisen, da durch Abgleich der Position mit den Kartierungsdaten lediglich ein Fahrspursegment, d.h. ein Längenabschnitt der Fahrspur ermittelt wird, und nicht die Querposition des Fahrzeugs auf der Fahrspur. Da weiterhin auch der Krümmungsverlauf der Fahrspur üblichen digitalen Karten entnehmbar ist, kann das Verfahren sowohl bezüglich der Fahrzeugposition als auch bezüglich der digitalen Kartierungsdaten auf in üblichen Navigationssystemen ohnehin vorhandene Daten zurückgreifen, so dass es mit sehr geringem Aufwand implementierbar ist.

Gemäß einer bevorzugten Weiterbildung des erfindungsgemäßen Verfahrens umfasst das Ermitteln des aktuellen Fahrspursegments zunächst einen Schritt des Erinittelns einer ersten, zweiten und dritten Stützstelle entlang der Fahrspur, an denen die Fahrspur jeweils eine erste, zweite und dritte Fahrbahnkrümmung aufweist, aus den digitalen Kartierungsdaten. Herkömmliche digitale Karten enthalten üblicherweise sowohl derartige Stützstellen, d.h. geografische Positionen, entlang derer die Fahrspur verläuft, als auch Angaben zum lokalen Krümmungsradius an den jeweiligen Stützstellen. Zum Ermitteln des aktuellen Fahrspursegments werden eine erste Krümmungsänderung pro Fahrspurstrecke zwischen der ersten und zweiten Stützstelle und eine zweite Krümmungsänderung pro Fahrspurstrecke zwischen der zweiten und dritten Stützstelle berechnet. Sodann wird eine erste Differenz zwischen der ersten und zweiten Krümmungsänderung pro Fahrspurstrecke berechnet. Wenn die erste Differenz einen Schwellwert überschreitet, wird an der zweiten Stützstelle eine Grenze des aktuellen Fahrspursegments festgelegt. Auf diese Weise verläuft bei geeigneter Festlegung des Schwellwerts die Grenze zwischen zwei Fahrspursegmenten so, dass innerhalb der jeweiligen Fahrspursegmente die Krümmung bzw. der Krümmungsradius sich näherungsweise konstant mit der Fahrspurstrecke ändert. Dies ist vorteilhaft, da gemäß geltender Richtlinien zur Anlage von Straßen Fahrspurverläufe stückweise aus derartigen Segmenten (Trassierungselementen) konstruiert werden, mithin die dem realen Fahrspurverlauf beim Straßenbau zugrunde gelegte Aufteilung in Trassierungselemente rekonstruiert werden. Dies ermöglicht eine besonders zuverlässige Ermittlung des realen Krümmungsverlaufs und damit letztendlich des Verlaufs der Fahrspur.

Vorzugsweise umfasst das Ermitteln des aktuellen Fahrspursegments dabei weiterhin das Ermitteln einer vierten Stützstelle entlang der Fahrspur, an der die Fahrspur eine vierte Fahrbahnkrümmung aufweist, aus den digitalen Kartierungsdaten. Weiterhin wird eine dritte Krümmungsänderung pro Fahrspurstrecke zwischen der dritten und vierten Stützstelle berechnet. Eine zweite Differenz zwischen der zweiten und dritten Krümmungsänderung pro Fahrspurstrecke wird ermittelt. Wenn die erste und zweite Differenz den Schwellwert überschreiten, wird die Grenze des aktuellen Fahrspursegments an einer zusätzlichen Stützstelle zwischen der zweiten und dritten Stützstelle festgelegt. Dies ermöglicht, die Segmentgrenze besonders präzise bei einer beim Straßenbau zugrunde gelegten Trassierungselementgrenze zu platzieren, auch wenn die digitalen Kartierungsdaten keinen Stützpunkt enthalten, der direkt auf der Trassierungselementgrenze liegt. Dies ermöglicht eine noch zuverlässigere Ermittlung des realen Krümmungsverlaufs und damit letztendlich des Verlaufs der Fahrspur. Vorzugsweise wird die zusätzliche Stützstelle derart ermittelt, dass eine Extrapolation der ersten Krümmungsänderung pro Fahrspurstrecke und eine Extrapolation der dritten Krümmungsänderung pro Fahrspurstrecke an der zusätzlichen Stützstelle eine gleiche Fahrbahnkrümmung ergeben. So wird die Segmentgrenze präzise an der Trassierungselementgrenze positioniert.

Gemäß einer bevorzugten Weiterbildung erfolgt das Festlegen der Klasse des aktuellen Fahrspursegments aus einer Vielzahl von Segmentklassen. Die Vielzahl der Segmentklassen umfasst mindestens eine aus der folgenden Liste ausgewählte Segmentklasse: eine Klasse der geraden Segmente, eine Klasse der Kreisbogensegmente, eine Klasse der Übergangsbogensegmente. Diese Aufteilung entspricht geltenden Richtlinien zur Anlage von Straßen, sodass die adaptive Filterung der Spurinformationen basierend auf dieser Klassifizierung eine besonders präzise Ermittlung des Fahrspurverlaufs insbesondere bei richtlinienkonform angelegten Straßen ermöglicht.

Gemäß einer bevorzugten Weiterbildung erfolgt das Erfassen der Spurinformationen für einen vor dem Fahrzeug liegenden Bereich, z.B. mittels einer video- oder radarbasierten Spurinformationseinrichtung. Auf diese Weise kann die Querführung des Fahrzeugs vorausschauend überwacht werden, z.B. um Warnungen oder Lenkeingriffe frühzeitig zu veranlassen.

Gemäß einer bevorzugten Weiterbildung erfolgt das Erfassen der Spurinformationen mittels Umfeldsensoren, insbesondere Video- und/oder Radarsensoren. Dies hat den Vorteil, dass die Relativposition des Fahrzeugs zur realen Fahrspur besonders präzise bestimmt werden kann.

Gemäß einer alternativen Weiterbildung erfolgen das Erfassen der Position oder/und das Erfassen der Spurinformationen mittels einer satellitengestützten Positionserfassungseinrichtung. Dies ist besonders kostengünstig, da z.B. die Positionserfassungseinrichtung eines vorhandenen Navigationssystems mitgenutzt werden kann bzw. für das Erfassen der Position und das Erfassen der Spurinformationen nur eine einzige Einrichtung notwendig ist.

KURZE BESCHREIBUNG DER ZEICHNUNGEN

Die vorliegende Erfindung wird nachfolgend anhand bevorzugter Ausführungsformen und beigefügten Figuren erläutert. Von den Figuren zeigen:

Fig. 1    eine schematische Blockdarstellung einer Vorrichtung zum Ermitteln eines Verlaufs einer von einem Fahrzeug befahrenen Fahrspur gemäß einer Ausführungsform der Erfindung;

Fig. 2    ein Ablaufdiagramm eines Verfahrens zum Ermitteln eines Verlaufs einer von ei- nem Fahrzeug befahrenen Fahrspur gemäß einer Ausführungsform;

Fig. 3    eine schematische Draufsicht auf eine von einem Fahrzeug befahrene Fahrspur;

Fig. 4    ein Diagramm eines Krümmungsverlaufs einer Fahrspur über der Fahrspurstrecke; und

Fig. 5    ein Diagram eines zeitlichen Krümmungsverlaufs einer Fahrspur, die von einem Fahr- zeug befahren wird.

In den Figuren bezeichnen gleiche Bezugszeichen gleiche oder funktionsgleiche Elemente, soweit nicht explizit anders angegeben.

AUSFÜHRUNGSFORMEN DER ERFINDUNG

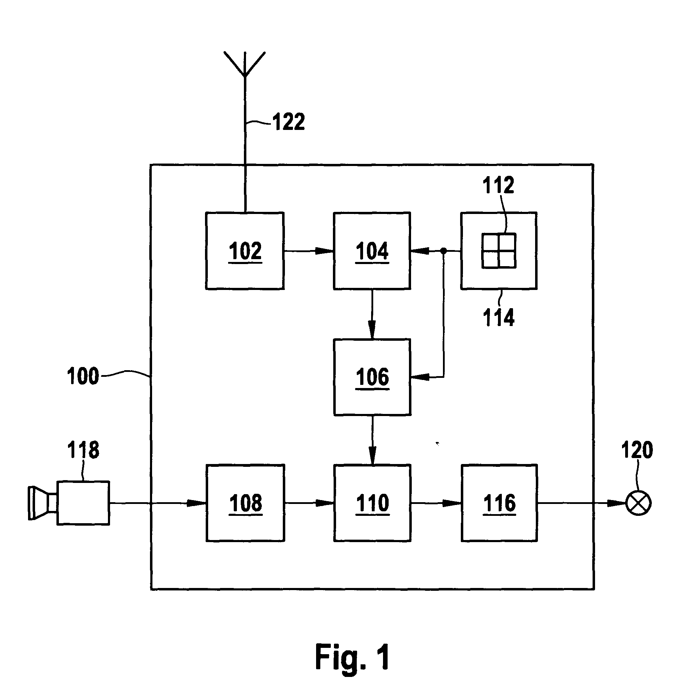

Figur 1 zeigt in schematischer Blockdarstellung eine Vorrichtung 100 zum Ermitteln eines Verlaufs einer von einem Fahrzeug befahrenen Fahrspur und Abgabe einer Warnung an den Fahrer, wenn das Fahrzeug die Fahrspur zu verlassen droht. Die Vorrichtung 100 ist zum Einbau in das Fahrzeug bestimmt. Sie umfasst eine Positionserfassungseinrichtung 102 zum Erfassen einer Position des Fahrzeugs über eine ebenfalls im Fahrzeug eingebaute Antenne 122, die Funksignale von Satelliten eines satellitengestützten Positionsbestimmungssystems wie z.B. GPS oder GLONASS empfängt.

Die Vorrichtung 100 umfasst weiterhin einen Fahrspursegmentermittler 104 zum Ermitteln eines aktuellen Fahrspursegments der befahrenen Fahrbahn, basierend auf der von der Positionserfassungseinrichtung 102 erfassten Position und digitalen Kartierungsdaten 112 der Fahrspur, die in einem Speicher 114 abgelegt sind. Der Fahrspursegmentermittler 104 steht zu diesem Zweck sowohl mit der Positionserfassungseinrichtung 102 als auch mit dem Speicher 114 in Verbindung. Der Speicher 114 mit den Kartierungsdaten 112 und die Positionserfassungseinrichtung 102 können als Teil eines ggf. in einem separaten Gehäuse angeordneten Navigationssystems des Fahrzeugs ausgebildet sein.

Die Vorrichtung 100 umfasst ferner einen Fahrspursegmentklassifizierer 106 zum Einordnen des aktuellen Fahrspursegments in eine Klasse von Fahrspursegmenten entsprechend dem Krümmungsverlauf der Fahrspur im aktuellen Fahrspursegment. Der Fahrspursegmentklassifizierer 106 ist dazu ausgebildet, den Krümmungsverlauf ebenfalls basierend auf den digitalen Kartierungsdaten 112 zu ermitteln und steht zu diesem Zweck mit dem Speicher 114 in Verbindung.

Die Vorrichtung 100 umfasst ferner eine Spurinformationseinrichtung 108 zum Erfassen von Spurinformationen zur Erkennung der Fahrspur im aktuellen Fahrspursegment. Die Spurinformationseinrichtung 108 steht zu diesem Zweck mit einer Videokamera 118 in Verbindung, die Videobilder des vor dem Fahrzeug liegenden Verkehrsraums liefert. Die Spurinformationseinrichtung 108 ist dazu ausgebildet, aus dem von der Videokamera 118 empfangenen Videosignal Fahrstreifenmarkierungen der befahrenen Fahrspur zu detektieren und in ein Spurinformationssignal umzuwandeln, das den Verlauf der Fahrspur im aktuellen Fahrspursegment relativ zum Fahrzeug angibt.

Die Vorrichtung 100 umfasst ferner ein Spurinformationsfilter 110 zum adaptiven Filtern des von der Spurinformationseinrichtung 108 erhaltenen Spurinformationssignals in Abhängigkeit von der Klasse des aktuellen Fahrspursegments. Zu diesem Zweck steht das Spurinformationsfilter 110 sowohl mit dem Fahrspursegmentklassifizierer 106 als auch mit der Spurinformationseinrichtung 108 in Verbindung. Je nachdem, welcher Klasse das aktuelle Spursegment durch den Fahrspursegmentklassifizierer 106 zugeordnet wurde, arbeitet das Spurinformationsfilter 110 unter einer anderen Modellannahme, d.h. auf eine andere Weise, die den Typ des Krümmungsverlaufs im aktuellen Fahrspursegment berücksichtigt. Am Ausgang des Spurinformationsfilters 110 stehen gefilterte Fahrspurinformationen bereit, die den Verlauf der Fahrspur im aktuellen Fahrspursegment vor dem und relativ zum Fahrzeug mit hoher Präzision wiedergeben.

Schließlich umfasst die Vorrichtung 100 eine Spurhalteeinrichtung 116, die mit dem Ausgang des Spurinformationsfilters 110 sowie einem Lenkaktor 120 verbunden ist. Die Spurhalteeinrichtung 116 ist dazu ausgebildet, anhand der vom Spurinformationsfilter 110 bereitgestellten gefilterten Spurinformationen, die den Verlauf der Fahrspur relativ zum Fahrzeug beschreiben und durch Lenkeingriffe innerhalb der Fahrspur zu halten.

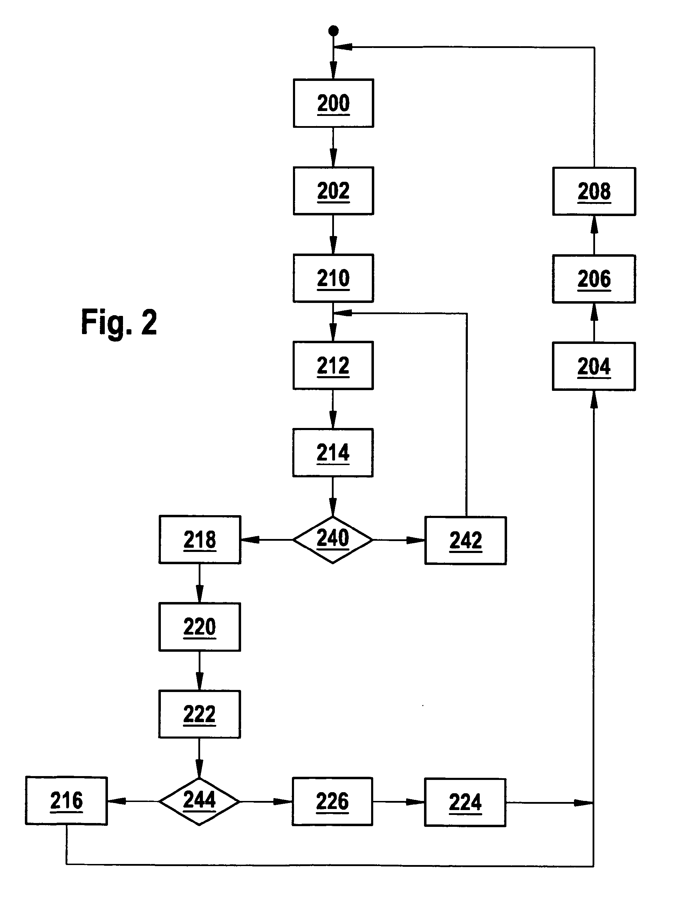

Figur 2 zeigt ein Ablaufdiagramm eines Verfahrens zum Ermitteln eines Verlaufs einer von einem Fahrzeug befahrenen Fahrspur, wie es z.B. von einer wie in Fig. 1 gezeigten Vorrichtung ausgeführt werden kann.

In Schritt 200 des Verfahrens wird zunächst eine Position des Fahrzeugs erfasst, z.B. indem diese von einem vorhandenen Navigationssystem abgefragt wird. In Schritt 202 wird der Beginn eines aktuellen Fahrspursegments ermittelt, basierend auf der erfassten Position und digitalen Kartierungsdaten der Fahrspur, die ebenfalls z.B. von dem vorhandenen Navigationssystem erhalten werden und beispielsweise einer in einem DVD-Laufwerk oder auf einer Festplatte des Navigationssystem enthaltenen digitalen Karte entnommen sein können.

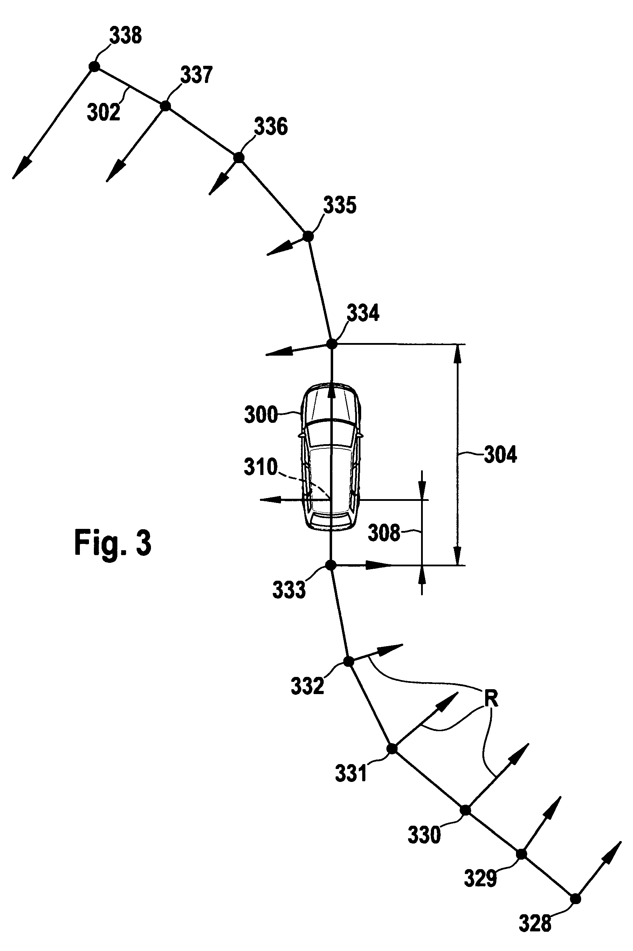

Zur näheren Erläuterung ist in Fig. 3 eine schematische Draufsicht auf eine Fahrspur 302 in der Form gezeigt, wie sie in Form digitaler Kartierungsdaten in einer üblichen digitalen Karte gespeichert ist. Die digitalen Karticrungsdaten umfassen eine Reihe von Stützstellen 328-338, entlang derer die Fahrbahn 302 verläuft. Der Datensatz einer jeden Stützstelle enthält dabei außer den geografischen Koordinaten des betreffenden Punkts auch einen jeweiligen Krümmungsradius R bzw. eine Krümmung $\kappa = 1/R$ der Fahrspur im Punkt der Stützstelle sowie einen Wegstreckenwert, der eine Wegstrecke entlang der Fahrspur von einem Ausgangspunkt bis zur Stützstelle angibt. Der durch die digitale Karte festgelegte Ausgangspunkt ist beliebig aber fest und kann im vorliegenden Fall z.B. mit der Stützstelle 328 zusammenfallen. Das Navigationssystem, das die digitalen Kartierungsdaten verwendet, bestimmt die aktuelle Längsposition und Ausrichtung des Fahrzeugs 300 auf der Fahrbahn 302, z.B. indem die letzte hinter dem Fahrzeug liegende Stützstelle 333 und die seit dieser Stützstelle 333 gefahrene Distanz 308 ermittelt werden, die einen Teil der Gesamtdistanz 304 bis zur nächsten vor dem Fahrzeug liegenden Stützstelle 334 darstellt. Dabei wird als Position des Fahrzeugs 300 z.B. die Position des Zentrums 310 der Hinterachse des Fahrzeugs 300 angesehen.

Der Beginn des aktuellen Fahrspursegments kann in Schritt 202 z.B. als die Position der letzten hinter dem Fahrzeug liegenden Stützstelle 333 ermittelt werden. Um das Ende des aktuellen Fahrspursegments zu ermitteln, wird in Schritt 210 zunächst eine erste 333, zweite 334 und dritte 335 Stützstelle entlang der Fahrspur ermittelt, wozu zweckmäßigerweise beginnend mit dem in Schritt 202 ermittelten Beginn 333 an der in Fahrtrichtung voranschreitend den digitalen Kartierungsdaten fortlaufend weitere Stützstellen 334, 335 entnommen werden. Zu der ermittelten ersten bis dritten Stützstelle 333-335 werden auch die zugehörigen Krümmungen $\kappa_1$, $\kappa_2$, $\kappa_3$ und ebenfalls in den digitalen Kartierungsdaten

enthaltene Wegstreckenwerte $s_1$, $s_2$, $s_3$ vom Ausgangspunkt 328 bis zu den jeweiligen Stützstellen 333-335 ermittelt. Im Folgenden soll dabei $s_k$ die Wegstrecke vom Ausgangspunkt 330 der Wegstreckenberechnung bis zur k-ten Stützstelle bezeichnen.

In Schritt 212 werden jeweilige Krümmungsänderungen $\kappa'_1$, $\kappa'_2$ pro Wegstrecke zwischen den jeweils benachbarten Stützstellen 333 und 334 bzw. 334 und 335 berechnet:

$$\kappa'_i = \frac{\kappa_{i+1} - \kappa_i}{s_{i+1} - s_i}$$

mit i = 1, 2. Anschließend wird in Schritt 214 eine erste Differenz $\Delta\kappa'_1 = \kappa'_1 - \kappa'_2$ zwischen der ersten und zweiten Krümmungsänderung pro Fahrspurstrecke berechnet. In Verzweigungsschritt 240 wird die erste Differenz $\Delta\kappa'_1$ mit einem vorgegebenen Schwellwert verglichen. Wenn die erste Differenz $\Delta\kappa'_1$ einen kleineren Betrag aufweist als der Schwellwert, wird geschlossen, dass die Ableitung der lokalen Krümmung nach der Wegstrecke im Intervall zwischen der ersten 333 und dritten 335 Stützstelle im Wesentlichen konstant ist. Das heißt, der Krümmungsverlauf zwischen der ersten 333 und zweiten 334 Stützstelle setzt sich auch über die zweite Stützstelle 334 hinaus bis mindestens zur dritten Stützstelle 335 im Wesentlichen fort. In diesem Fall wird nach Schritt 242 verzweigt, wo die Daten der zweiten Stützstelle 334 ersetzt werden durch die Daten der dritten Stützstelle 335, und die Daten der dritten Stützstelle 335 ersetzt werden durch die Daten der unmittelbar davor liegenden nächstnachfolgenden Stützstelle 336. Die Schritte 242, 212, 214 und der Verzweigungsschritt 240 werden so lange wiederholt, bis eine Stützstelle als zweite Stützstelle aufgefunden wird, an der die erste Differenz $\Delta\kappa'_1$ einen größeren Betrag aufweist als der Schwellwert, der Krümmungsverlauf entlang der Fahrspur demnach eine wesentliche Änderung zeigt.

Im letzteren Fall wird in Verzweigungsschritt 240 nach Schritt 218 gesprungen. Zum Zwecke der Erläuterung soll im Folgenden angenommen werden, dass beim zweiten Erreichen von Verzweigungsschritt 240 nach Schritt 218 gesprungen wurde, sodass die Stützstelle 334 unverändert als zweite Stützstelle gültig ist. In Schritt 218 wird nun aus den digitalen Kartierungsdaten eine vierte Stützstelle entlang der Fahrspur 302 ermittelt, die in Fahrtrichtung des Fahrzeugs 300 noch jenseits der dritten Stützstelle 335 liegt. Zweckmäßigerweise ist dies die der dritten Stützstelle 335 in der Fahrtrichtung unmittelbar nachfolgende Stützstelle 336. Wie die erste bis dritte Stützstelle 333-335 umfasst auch die vierte Stützstelle 336 je einen zugehörigen Wegstrecken- und Fahrspurkrümmungswert der Fahrspur 302 an der vierten Stützstelle 336.

In Schritt 220 wird eine dritte Krümmungsänderung $\kappa'_3$ pro Fahrspurstrecke zwischen der dritten 335 und vierten 336 Stützstelle berechnet, in der gleichen Weise wie dies in Schritt 212 für die erste 333 und zweite 334 Stützstelle, sowie für die zweite 334 und dritte 335 Stützstelle geschehen ist. In Schritt 222 wird eine zweite Differenz $\Delta\kappa'_2 = \kappa'_2 - \kappa'_3$ zwischen der zweiten und dritten Krümmungsänderung pro Fahrspurstrecke berechnet, in der gleichen Weise wie dies in Schritt 214 für die erste 333 und zweite 334 Stützstelle, sowie für die zweite 334 und dritte 335 Stützstelle geschehen ist.

In Verzweigungsschritt 224 wird die zweite Differenz $\Delta\kappa'_2$ mit einem vorgegebenen Schwellwert verglichen, der z.B. mit dem in Verzweigungsschritt 240 verwendeten Schwellwert identisch vorgegeben ist. Wenn die zweite Differenz $\Delta\kappa'_1$ einen kleineren oder gleichen Betrag aufweist als der Schwellwert, wird geschlossen, dass die Ableitung der lokalen Krümmung nach der Wegstrecke im Intervall zwischen der dritten 335 und vierten 336 Stützstelle im Wesentlichen konstant ist. Das heißt, der Krümmungsverlauf zwischen der zweiten 334 und dritten 335 Stützstelle setzt sich auch über die dritte Stützstelle 335 hinaus bis mindestens zur vierten Stützstelle 336 im Wesentlichen fort. In diesem Fall wird nach Schritt 216 verzweigt, wo das Ende des aktuellen Fahrspursegments an der dritten Stützstelle 335 festgesetzt wird. Damit stehen die Grenzen des aktuellen Fahrspursegments fest.

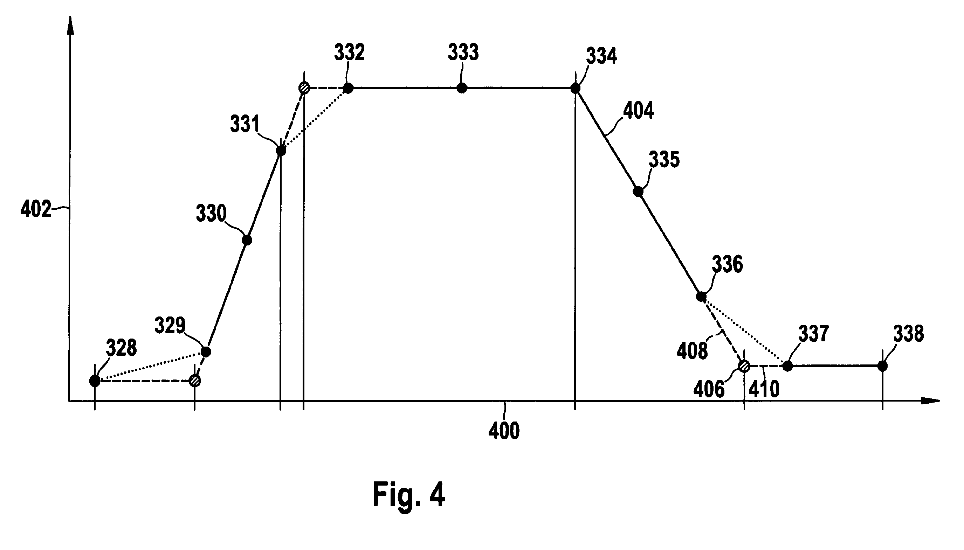

Der genannte Fall soll anhand von Fig. 4 näher erläutert werden. Figur 4 zeigt ein Diagramm des Krümmungsverlaufs einer Fahrspur über der Wegstrecke entlang der Fahrspur. Entlang einer horizontalen Achse 400 ist die Wegstrecke, und entlang einer vertikalen Achse 402 die lokale Krümmung ausgetragen. (Die in Fig. 3 angedeuteten Krümmungsradien R sind dort rein illustrativ und stehen in keiner Beziehung zu den Krümmungswerten in Fig. 4.) Ausgehend von Stützstelle 333 wurde in Verzweigungsschritt 240 festgestellt, dass die Ableitung des Krümmungsverlaufs 404 nach der Wegstrecke sich an der zweiten Stützstelle 334 signifikant ändert (d.h. einen größeren Änderungsbetrag aufweist als der Schwellwert), über die dritte Stützstelle 335 hinweg jedoch wesentlich konstant bleibt (d.h. einen Änderungsbetrag aufweist, der nicht größer ist als der Schwellwert).

Wird jedoch in Verzweigungsschritt 244 festgestellt, dass die zweite Differenz $\Delta\kappa'_2$ einen größeren Betrag aufweist als der Schwellwert, so wird hypothetisch angenommen, dass die Ableitung der Krümmung der realen Fahrbahn über der Wegstrecke auch im Intervall zwischen der zweiten und dritten Stützstelle nicht konstant ist. Das Verfahren geht vielmehr von der Annahme aus, dass die Ableitung des Krümmungsverlaufs 404 sich in einem Punkt innerhalb des Intervalls zwischen der zweiten und dritten Stützstelle sprunghaft ändert, an der zweiten und dritten Stützstelle jedoch jeweils konstant ist. Dieser Fall ist in Fig. 4 jeweils zwischen den Stützstellen 328 und 329, 331 und 332 bzw. 336 und 337 dargestellt. Für die folgende Erläuterung soll angenommen werden, dass die erste bis vierte Stützstelle an den Stützstellen 335 bis 338 liegt. Das Verfahren springt Verzweigungsschritt 244 zu Schritt 226.

In Schritt 226 wird eine zusätzliche Stützstelle 406 zwischen der zweiten 336 und dritten 337 Stützstelle derart ermittelt, dass eine Extrapolation 408 der ersten Krümmungsänderung pro Fahrspurstrecke (zwischen der ersten 335 und zweiten 336 Stützstelle) und eine Extrapolation 410 der dritten Krümmungsänderung pro Fahrspurstrecke (zwischen der dritten 337 und vierten 338 Stützstelle) an der zusätzlichen Stützstelle 406 eine gleiche Fahrbahnkrümmung ergeben. In Fig. 4 ist dies der Schnittpunkt 406 der beiden Extrapolationsgeraden 408, 410. In Schritt 224 wird die Grenze, an der das aktuelle Fahrspursegment endet, an der zusätzlichen Stützstelle 406 zwischen der zweiten 336 und dritten 337 Stützstelle festgelegt.

Das Verfahren springt nun zu Schritt 204, wo dem aktuellen Fahrspursegment, dessen Grenzen nunmehr festliegen, eine Klasse aus einer vorgegebenen Vielzahl von Segmentklassen zugewiesen wird. Beispielsweise wird dem aktuellen Fahrspursegment abhängig von der Krümmung und der Krümmungsänderung der Fahrspur innerhalb des aktuellen Fahrspursegments eine der folgenden Klassen zugewiesen:

- eine Klasse gerader Segmente, wenn die Krümmungswerte für den Anfangs- und Endpunkt des aktuellen Fahrspursegments gleich 0 sind bzw. Beträge aufweisen, die einen vorgebbaren Nullkrümmungsschwellwert nicht übersteigen,

- eine Klasse der Kreisbogensegmente, wenn die Krümmungswerte für den Anfangs- und Endpunkt des aktuellen Fahrspursegments ungleich 0 sind bzw. einen größeren Betrag aufweisen als der Nullkrümmungsschwellwert und gleichzeitig die Differenz der Krümmungswerte für den Anfangs- und Endpunkt des aktuellen Fahrspursegments gleich 0 ist bzw. einen vorgebbaren Nullkrümmungsänderungsschwellwert nicht übersteigen, oder

- eine Klasse der Übergangsbogensegmente (Klothoiden), wenn die Differenz der Krümmungswerte für den Anfangs- und Endpunkt des aktuellen Fahrspursegments ungleich 0 ist bzw. einen größeren Betrag aufweist als der Nullkrümmungsänderungsschwellwert.

In Schritt 206 werden mit einer videobasierten Spurinformationseinrichtung Spurinformationen zur Erkennung der Fahrspur im aktuellen Fahrspursegment erfasst, die einen Krümmungsverlauf der Fahrspur vor dem Fahrzeug beschreiben.

In Schritt 208 werden die Spurinformationen in Abhängigkeit von der in Schritt 204 zugewiesenen Klasse des aktuellen Fahrspursegments adaptiv gefiltert. Dies bedeutet, dass je nachdem, ob das aktuelle Fahrspursegment als ein gerades Segment, ein Kreisbogensegment oder ein Übergangsbogensegment angesehen wird, werden unterschiedliche modellbasierte Filteralgorithmen eingesetzt, die von einem unterschiedlichen Modell eines Fahrspurverlaufs ausgehen. Für die Filterung ist z.B. ein Kalman-Filter mit Multimodellansatz geeignet. Je nach Art des aktuellen Fahrspursegments wird das Modell des Filters angepasst oder zwischen verschiedenen Modellen umgeschaltet. Beispielsweise wird eine Filterung mit einer Modellannahme einer linearen Änderung der lokalen Krümmung über der Wegstrecke durchgeführt, wenn das aktuelle Fahrspursegment ein Übergangsbogen ist, eine Filterung mit einer Modellannahme einer über der Wegstrecke konstanten Krümmung, wenn das aktuelle Fahrspursegment ein Kreisbogen ist, und eine Filterung mit einer Modellannahme, dass die lokale Krümmung überall im Fahrspursegment gleich null ist, wenn das aktuelle Fahrspursegment eine Gerade ist.

Nach Schritt 208 beginnt das Verfahren erneut bei Schritt 200, sodass die befahrene Fahrspur fortlaufend in Segmente unterteilt wird.

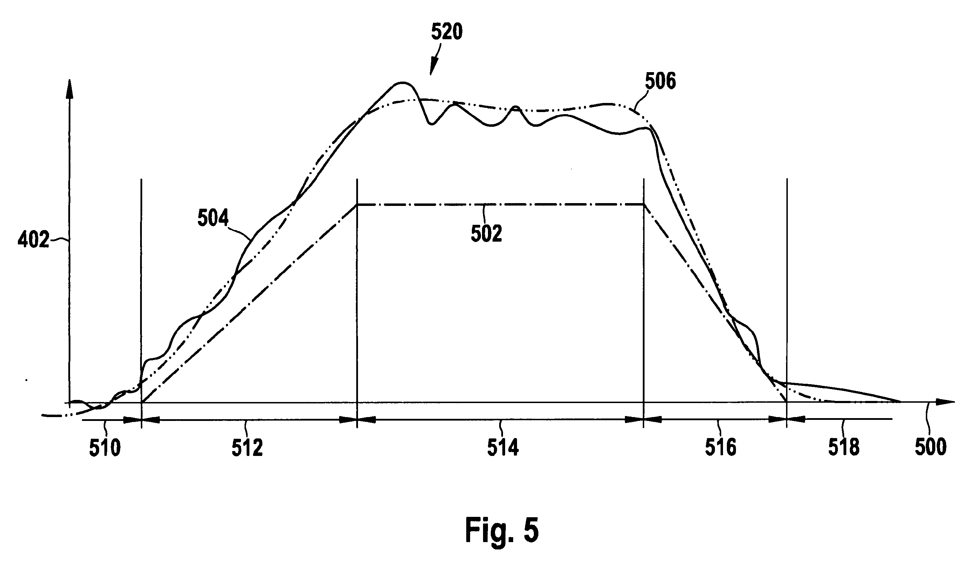

Figur 5 zeigt ein Diagramm eines zeitlichen Krümmungsverlaufs einer Fahrspur, die von einem Fahrzeug befahren wird. Über einer Zeitachse 500 ist entlang einer vertikalen Krümmungsachse 402 ein aus den digitalen Kartierungsdaten auf die oben beschriebene Art und Weise ermittelter kartengestützter Krümmungsverlauf 502 aufgetragen. Es wird eine konstante Geschwindigkeit des Fahrzeugs angenommen, sodass eine lineare Änderung der Krümmung mit der Zeit 500 auch einer linearen Änderung der Krümmung über der Wegstrecke entspricht. Die befahrene Wegstrecke wurde auf die oben beschriebene Weise in Fahrspursegmente 512-518 unterteilt, wobei den Segmenten 510 und 518 die Klasse der Geraden, dem Segment 514 die Klasse der Kreisbögen und den Segmenten 512 und 516 die Klasse der Übergangsbögen (Klothoiden) zugewiesen wurde.

Entlang derselben Achsen 500, 402 sind weiterhin videobasierte Fahrspurinformationen 504 aufgetragen, die ebenfalls den Krümmungsverlauf derselben Fahrspurstrecke beschreiben. Die videobasierten Fahrspurinformationen 504 zeigen Oszillationen 520, die z.B. durch Messfehler des videobasierten Verfahrens, mit dem die Fahrspurinformationen aufgenommen wurden, oder/und durch fehlende, verdeckte oder ungenaue Fahrspurmarkierungen hervorgerufen sind.

Ferner sind entlang derselben Achsen 500, 402 gefilterte Fahrspurinformationen 506 aufgetragen, die aus den videobasierten Fahrspurinformationen 504 durch adaptives, modellbasiertes Filtern gewonnen wurde, wobei jeweils in den einzelnen Fahrspursegmenten 510-518 unterschiedliche Modellannahmen gemacht wurden, je nach der dem jeweiligen Fahrspursegment zugewiesenen Klasse. In den gefilterten Fahrspurinformationen 506 sind die Oszillationen 520 der zugrundeliegenden videobasierten Filterinformationen 504 unterdrückt, so dass die gefilterten Fahrspurinformationen 506 den Krümmungsverlauf der realen Fahrspur mit erhöhter Präzision wiedergeben.

**Patentansprüche**

1. Verfahren zum Ermitteln eines Verlaufs einer von einem Fahrzeug (300) befahrenen Fahrspur (302), mit folgenden Schritten:

   - Erfassen (200) einer Position des Fahrzeugs (300);
   - Ermitteln (202-226) eines aktuellen Fahrspursegments, basierend auf der erfassten Position und digitalen Kartierungsdaten (112) der Fahrspur (302);
   - Festlegen (204) einer Klasse des aktuellen Fahrspursegments entsprechend einem Krümmungsverlauf der Fahrspur (302) im aktuellen Fahrspursegment, basierend auf den digitalen Kartierungsdaten (112);
   - Erfassen (206) von Spurinformationen zur Erkennung der Fahrspur (302) im aktuellen Fahrspursegment; und
   - Adaptives Filtern (208) der Spurinformationen in Abhängigkeit von der Klasse des aktuellen Fahrspursegments, wobei abhängig von der Klasse des aktuellen Fahrspursegments unterschiedliche modellbasierte Filteralgorithmen eingesetzt werden, die von einem unterschiedlichen, an die Klasse des Fahrspursegments angepassten Modell eines Fahrspurverlaufs ausgehen.

2. Verfahren nach Anspruch 1, wobei das Ermitteln (202-226) des aktuellen Fahrspursegments umfasst:

   - Ermitteln (210) einer ersten (333), zweiten (334) und dritten (335) Stützstelle entlang der Fahrspur (302), an denen die Fahrspur (302) jeweils eine erste ($\kappa_1$), zweite ($\kappa_2$) und dritte ($\kappa_3$) Fahrbahnkrümmung aufweist, aus den digitalen Kartierungsdaten (112);
   - Berechnen (212) einer ersten Krümmungsänderung pro Fahrspurstrecke zwischen der ersten (333) und zweiten (334) Stützstelle, und einer zweiten Krümmungsänderung pro Fahrspurstrecke zwischen der zweiten (334) und dritten (335) Stützstelle;
   - Ermitteln (214) einer ersten Differenz zwischen der ersten und zweiten Krümmungsänderung pro Fahrspurstrecke; und
   - Festlegen (216) einer Grenze des aktuellen Fahrspursegments an der zweiten Stützstelle, wenn die erste Differenz einen Schwellwert überschreitet.

3. Verfahren nach Anspruch 2, wobei das Ermitteln (202-226) des aktuellen Fahrspursegments weiterhin umfasst:

- Ermitteln (218) einer vierten Stützstelle entlang der Fahrspur (302), an der die Fahrspur eine vierte Fahrbahnkrümmung aufweist, aus den digitalen Kartierungsdaten (112);
- Berechnen (220) einer dritten Krümmungsänderung pro Fahrspurstrecke zwischen der dritten und vierten Stützstelle;
- Ermitteln (222) einer zweiten Differenz zwischen der zweiten und dritten Krümmungsänderung pro Fahrspurstrecke; und
- Festlegen (224) der Grenze des aktuellen Fahrspursegments an einer zusätzlichen Stützstelle zwischen der zweiten und dritten Stützstelle, wenn die erste und zweite Differenz den Schwellwert überschreiten.

4. Verfahren nach Anspruch 3, wobei zum Ermitteln (202-226) des aktuellen Fahrspursegments weiterhin ein Schritt des Ermittelns (226) der zusätzlichen Stützstelle derart ausgeführt wird, dass eine Extrapolation der ersten Krümmungsänderung pro Fahrspurstrecke und eine Extrapolation der dritten Krümmungsänderung pro Fahrspurstrecke an der zusätzlichen Stützstelle eine gleiche Fahrbahnkrümmung ergeben.

5. Verfahren nach einem der vorhergehenden Ansprüche, wobei das Festlegen der Klasse des aktuellen Fahrspursegments aus einer Vielzahl von Segmentklassen erfolgt, welche mindestens eine der folgenden umfasst:

- eine Klasse gerader Segmente;
- eine Klasse der Kreisbogensegmente; und
- eine Klasse der Übergangsbogensegmente.

6. Verfahren nach einem der vorhergehenden Ansprüche, wobei das Erfassen der Spurinformationen für einen vor dem Fahrzeug (300) liegenden Bereich erfolgt.

7. Verfahren nach einem der vorhergehenden Ansprüche, wobei das Erfassen der Spurinformationen mittels Umfeldsensoren, insbesondere Video- und/oder Radarsensoren erfolgt.

8. Verfahren nach einem der vorhergehenden Ansprüche, wobei das Erfassen der Position oder/und das Erfassen der Spurinformationen mittels einer satellitenbasierten Positionserfassungseinrichtung (102) erfolgt.

9. Computerprogrammprodukt mit Programmanweisungen, die auf einem maschinenlesbaren Träger gespeichert sind, zur Durchführung des Verfahrens nach wenigstens einem der vorhergehenden Ansprüche, wenn die Programmanweisungen auf einem Computer oder einer Steuervorrichtung (100) ausgeführt werden.

10. Vorrichtung (100) zum Ermitteln eines Verlaufs einer von einem Fahrzeug (300) befahrenen Fahrspur (302), mit:

einer Positionserfassungseinrichtung (102) zum Erfassen einer Position des Fahrzeugs (300);

- einem Fahrspursegmentermittler (104) zum Ermitteln eines aktuellen Fahrspursegments, basierend auf der erfassten Position und digitalen Kartierungsdaten (112) der Fahrspur (302);
- einem Fahrspursegmentklassifizierer (106) zum Festlegen einer Klasse des aktuellen Fahrspursegments entsprechend einem Krümmungsverlauf der Fahrspur (302) im aktuellen Fahrspursegment, basierend auf den digitalen Kartierungsdaten (112);
- einer Spurinformationseinrichtung (108) zum Erfassen von Spurinformationen zur Erkennung der Fahrspur (302) im aktuellen Fahrspursegment; und
- einem Spurinformationsfilter (110) zum adaptiven Filtern der Spurinformationen in Abhängigkeit von der Klasse des aktuellen Fahrspursegments, wobei abhängig von der Klasse des aktuellen Fahrspursegments unterschiedliche modellbasierte Filteralgorithmen eingesetzt werden, die von einem unterschiedlichen, an die Klasse des Fahrspursegments angepassten Modell eines Fahrspurverlaufs ausgehen.

**Claims**

1. Method for determining a course of a lane (302) which is travelled on by a vehicle (300), having the following steps:

- acquisition (200) of a position of the vehicle (300);
- determination (202-226) of a current lane segment, based on the acquired position and digital mapping data (112) of the lane (302);
- determination (204) of a class of the current lane segment corresponding to a curvature profile of the lane (302) in the current lane segment, based on the digital mapping data (112);
- acquisition (206) of lane information for detecting the lane (302) in the current lane segment; and
- adaptive filtering (208) of the lane information as a function of the class of the current lane segment, wherein different model-based filter algorithms are used depending on the class of the current lane segment, which filter algorithms are based on a different model of a course of a lane which is adapted to the class of the lane segment.

2. Method according to Claim 1, wherein the determination (202-226) of the current lane segment comprises:

- determination (210) of a first reference point (333), second reference point (334) and third reference point (335) along the lane (302), at which reference points the lane (302) respectively has a first carriageway curvature ($\kappa_1$), second carriageway curvature ($\kappa_2$) and third carriageway curvature ($\kappa_3$), from the digital mapping data (112);
- calculation (212) of a first change in curvature per section of lane between the first reference point (333) and the second reference point (334), and a second change in curvature per section of lane between the second reference point (334) and third reference point (335);
- determination (214) of a first difference between the first change in curvature and the second change in curvature per section of lane; and
- determination (216) of a boundary of the current lane segment at the second reference point if the first difference exceeds a threshold value.

3. Method according to Claim 2, wherein the determination (202-226) of the current lane segment also comprises:

- determination (218) of a fourth reference point along the lane (302) at which the lane has a fourth carriageway curvature, from the digital mapping data (112);
- calculation (220) of a third change in curvature per section of lane between the third and fourth reference points;
- determination (222) of a second difference between the second and third changes in curvature per section of lane; and
- determination (224) of the boundary of the current lane segment at an additional reference point between the second and third reference points if the first and second differences exceed the threshold value.

4. Method according to Claim 3, wherein, in order to determine (202-226) the current lane segment, a step of determining (226) the additional reference point is also carried out in such a way that an extrapolation of the first change in curvature per section of lane and an extrapolation of the third change in curvature per section of lane at the additional reference point yield an identical carriageway curvature.

5. Method according to one of the preceding claims, wherein the class of the current lane segment is determined from a multiplicity of segment classes which comprises at least one of the following:

- a class of straight segments;
- a class of arc segments; and
- a class of transition arc segments.

6. Method according to one of the preceding claims, wherein the acquisition of the lane information is carried out for a region which lies in front of the vehicle (300).

7. Method according to one of the preceding claims, wherein the acquisition of the lane information is carried out by means of surroundings sensors, in particular video sensors and/or radar sensors.

8. Method according to one of the preceding claims, wherein the acquisition of the position and/or the acquisition of the lane information is carried out by means of a satellite-based position-acquisition device (102).

9. Computer program product having program instructions which are stored on a machine-readable carrier, for carrying out the method according to at least one of the preceding claims when the program instructions are carried out on a computer or a control device (100).

10. Device (100) for determining a course of a lane (302) which is travelled on by a vehicle (300), having:

- a position-acquisition device (102) for acquiring a position of the vehicle (300);
- a lane segment determiner (104) for determining a current lane segment, based on the acquired position and digital mapping data (112) of the lane (302);
- a lane segment classifier (106) for determining a class of the current lane segment corresponding to a curvature profile of the lane (302) in the current lane segment, based on the digital mapping data (112);
- a lane information device (108) for acquiring lane information for detecting the lane (302) in the current lane segment; and
- a lane information filter (110) for adaptively filtering the lane information as a function of the class of the current lane segment, wherein different model-based filter algorithms are used depending on the class of the current lane segment, which filter algorithms are based on a different model of a course of a lane which is adapted to the class of the lane segment.

## Revendications

1. Procédé de détermination de l'évolution de la trajectoire (302) parcourue par un véhicule (300), le procédé comportant les étapes suivantes :

   - saisir (200) une position du véhicule (300),
   - déterminer (202-226) un segment en cours de la trajectoire de déplacement sur base de la position saisie et de données numériques (112) de cartographie de la trajectoire de déplacement (302),
   - sur base des données numériques (112) de cartographie, définir (204) la classe du segment en cours de la trajectoire de déplacement qui correspond à l'évolution de la courbure de la trajectoire de déplacement (302) dans le segment en cours de la trajectoire de déplacement,
   - saisir (206) des informations de trajectoire pour détecter la trajectoire de déplacement (302) dans le segment en cours de la trajectoire de déplacement et
   - filtrer (208) de manière adaptative les informations de trajectoire en fonction de la classe du segment en cours de la trajectoire de déplacement, différents algorithmes de filtrage basés sur modèles étant utilisés en fonction de la classe du segment en cours de la trajectoire de déplacement et provenant d'un modèle différent, adapté à la classe du segment de la trajectoire de déplacement, d'une évolution de la trajectoire de déplacement.

2. Procédé selon la revendication 1, dans lequel la détermination (202-226) du segment en cours de la trajectoire de déplacement comprend les étapes suivantes :

   - à partir des données numériques (112) de cartographie, déterminer (210) sur la trajectoire de déplacement (302) un premier point d'appui (333), un deuxième point d'appui (334) et un troisième point d'appui (335) sur lesquels la trajectoire de déplacement (302) présente respectivement une première courbure ($\kappa_1$) de la chaussée, une deuxième courbure ($\kappa_2$) de la chaussée et une troisième courbure ($\kappa_3$) de la chaussée,
   - calculer (212) une première modification de la courbure pour le segment de trajectoire de déplacement situé entre le premier point d'appui (333) et le deuxième point d'appui (334) et une deuxième modification de courbure pour le segment de trajectoire de déplacement situé entre le deuxième point d'appui (334) et le troisième point d'appui (335),
   - déterminer (214) une première différence entre la première et la deuxième modification de courbure pour chaque segment de trajectoire de déplacement et
   - définir (216) une limite du segment en cours de la trajectoire de déplacement au niveau du deuxième point d'appui si la première différence dépasse une valeur de seuil.

3. Procédé selon la revendication 2, dans lequel la détermination (202, 226) du segment en cours de la trajectoire de déplacement comprend en outre les étapes qui consistent à :

   - à partir des données numériques (112) de cartographie, déterminer (218) sur la trajectoire de déplacement (302) un quatrième point d'appui sur lequel la trajectoire de déplacement présente une quatrième courbure de la chaussée,
   - calculer (220) une troisième modification de la courbure pour la partie de la trajectoire de déplacement située entre le troisième et le quatrième point d'appui,
   - déterminer (222) une deuxième différence entre la deuxième et la troisième différence de courbure sur chaque partie de trajectoire de déplacement et
   - définir (224) la limite du segment en cours de la trajectoire de déplacement au niveau d'un point d'appui supplémentaire situé entre le deuxième et le troisième point d'appui si la première et la deuxième différence dépassent la valeur de seuil.

4. Procédé selon la revendication 3, dans lequel pour déterminer (202-226) le segment en cours de trajectoire de déplacement, une étape de détermination (226) du point d'appui supplémentaire est en outre exécutée de telle sorte qu'une extrapolation de la première modification de courbure pour chaque partie de trajectoire de déplacement et une extrapolation de la troisième modification de courbure pour chaque partie de trajectoire de déplacement donnent une même courbure de la chaussée au point d'appui supplémentaire.

5. Procédé selon l'une des revendications précédentes, dans lequel la détermination de la classe du segment en cours de la trajectoire de déplacement s'effectue à partir de plusieurs classes de segment qui comprennent au moins l'un des éléments suivants :

   - une classe de segments rectilignes,
   - une classe de segments en arc de cercle et
   - une classe de segments d'arc de transition.

6. Procédé selon l'une des revendications précédentes, dans lequel la saisie des informations de trajectoire s'effectue dans une zone située en avant du véhicule (300).

7. Procédé selon l'une des revendications précédentes, dans lequel la saisie des informations de trajectoire de déplacement s'effectue au moyen de détecteurs d'ambiance, en particulier de détecteurs vidéo et/ou de détecteurs radar.

8. Procédé selon l'une des revendications précédentes, dans lequel la saisie de la position et/ou la saisie des informations de trajectoire s'effectue au moyen d'un dispositif de localisation (102) basé sur satellites.

9. Produit de programme informatique doté d'indications de programme qui sont conservées sur un support lisible par machine, en vue de l'exécution du procédé selon au moins l'une des revendications précédentes lorsque les indications de programme sont exécutées sur un ordinateur ou un dispositif de commande (100).

10. Ensemble (100) de détermination de l'évolution d'une trajectoire de déplacement (302) parcourue par un véhicule (300), l'ensemble comprenant :

   - un dispositif (102) de saisie de position qui saisit une position du véhicule (300),
   - un dispositif (104) de détermination de segments de trajectoire de déplacement qui détermine un segment en cours de la trajectoire de déplacement sur base de la position saisie et de données numériques (112) de cartographie de la trajectoire de déplacement (302),
   - un classificateur (106) de segments de trajectoire de déplacement qui définit sur base des données numériques (112) de cartographie la classe du segment en cours de la trajectoire de déplacement en correspondance à l'évolution de courbure de la trajectoire de déplacement (302) dans le segment en cours de la trajectoire de déplacement,
   - un dispositif (108) d'informations sur la trajectoire qui saisit des informations sur la trajectoire en vue de détecter la trajectoire de déplacement (302) dans le segment en cours de la trajectoire de déplacement et
   - un filtre (110) d'informations sur la trajectoire qui filtre de manière adaptative les informations de trajectoire en fonction de la classe du segment en cours de la trajectoire de déplacement, différents algorithmes de filtrage basés sur modèles étant utilisés en fonction de la classe du segment en cours de la trajectoire de déplacement et fournissant une évolution de la trajectoire de déplacement à partir d'un modèle différent, adapté à la classe de segment de trajectoire de déplacement.

**Fig. 1**

Fig. 2

Fig. 3

Fig. 4

EP 2 172 826 B1

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6560535 B2

- DE 10311241 A1